# EUROPÄISCHE PATENTANMELDUNG

(11) **EP 2 520 853 A1**
(43) Veröffentlichungstag der Anmeldung: **07.11.2012**
(21) Anmeldenummer: 12175268.7
(22) Anmeldetag: 08.05.2001
(51) Int. Cl.: F21S 8/00

(54) **Flugbefeuerung für Windparks**

(30) Priorität: 09.05.2000 DE 20008289 U
(62) Teilanmeldung aus: 08165143.2
(71) Anmelder: Wobben, Aloys, 26607 Aurich (DE)
(72) Erfinder: Wobben, Aloys, 26607 Aurich (DE)
(74) Vertreter: Eisenführ, Speiser & Partner

(57) **Zusammenfassung**

1. Windpark bestehend aus mehreren Windenergieanlagen, wobei mindestens zwei der Windenergieanlagen eine Flugbefeuerungseinrichtung aufweisen, wobei jede Flugbefeuerungseinrichtung aufweist:
wenigstens ein Leuchtmittel, welches auf der Windenergieanlage angebracht ist,
wobei die Leuchtmittel als Blitzleuchten ausgebildet sind und
eine Einrichtung zur Erfassung des Helligkeitswertes, z. B. ein Dämmerungsschalter,
welcher die Tageshelligkeit in der Umgebung der Windenergieanlage erfasst,
eine mit der Einrichtung zum Erfassen des Helligkeitswertes verbundenen Schalteinrichtung, die die gemessenen Daten der Einrichtung zum Erfassen des Helligkeitswertes auswertet und die Flugbefeuerung einschaltet, wenn ein bestimmter Helligkeitswert unterschritten wird, und
eine Synchronisationseinrichtung, die die Leuchtmittel in der Weise steuert, dass die Leuchtmittel der Flugbefeuerung der Windenergieanlage wie auch die Leuchtmittel anderer Windenergieanlagen des Windparks zur gleichen Zeit an- bzw. ausgeschaltet sind,
wobei die Synchronisationseinrichtung durch eine Funksignalsteuerung andere Flugbefeuerungseinrichtungen in der Umgebung der ersten Flugbefeuerungseinrichtung steuert.

## Beschreibung

Die vorliegende Erfindung betrifft eine Flugbefeuerungseinrichtung eines Bauwerkes großer Höhe, vorzugsweise eines Turmes einer Windenergieanlage, mit wenigstens einem Leuchtmittel, und mit wenigstens einer Schalteinrichtung, welche das Leuchtmittel schaltet.

Bauwerke ab einer gewissen Höhe müssen je nach Standort und Behördenauflage mit einer sog. Nachtkennzeichnung bzw. Flugbefeuerungseinrichtung zur Flugsicherung ausgestattet werden. Die Nachtkennzeichnung besteht bei einer Gesamthöhe (Rotorblatt in 12.00 Uhr Position) unter 100 m aus einem sog. Hindernisfeuer, während bei einer Gesamthöhe über 100 m ein sog. Gefahrenfeuer notwendig ist.

Eine Hindernisbefeuerung besteht üblicherweise aus zwei Leuchtmitteln (zwei Leuchtkörpern), die nachts permanent leuchten, während das Gefahrenfeuer zwei Blitzleuchten (und zwei Reserveleuchten) aufweist, die im vorgegebenen Rhythmus abwechselnd leuchten. Die Leuchtstärke eines Gefahrenfeuers ist um ein Vielfaches stärker als die Leuchtstärke eines Hindernisfeuers. Je nach Vorgabe muss ebenfalls eine Notstromversorgung vorgesehen werden.

Aufgabe der Erfindung ist es, eine Flugbefeuerungseinrichtung von Windenergieanlagen zu verbessern und insbesondere deren Betrieb so effektiv wie möglich zu gestalten.

Erfindungsgemäß wird eine Flugbefeuerungseinrichtung vorgeschlagen, welche vorzugsweise über die folgenden Merkmale verfügt, die allein oder kumulativ ausgestaltet sein können.

Zum ersten ist es sinnvoll, die Hindernisbefeuerung wie aber auch die Gefahrenbefeuerung erst dann zu aktivieren, wenn die gesamte Umgebung einen bestimmten Helligkeitswert angenommen hat. Solcher Helligkeitswert lässt sich durch einen Dämmerungsschalter feststellen, der auf einen vorbestimmten Helligkeitswert eingestellt wird und die Flugbefeuerung wird aktiviert, wenn ein bestimmter Helligkeitswert erreicht (unterschritten) wird.

Mit einem solchen Dämmerungsschalter lässt sich das unnötige Einschalten der Flugbefeuerung vermeiden, so dass die gesamte Lebensdauer der Leuchtmittel verlängert wird, wobei immer noch eine ausreichende Sicherheit gewährleistet wird.

Eine weitere Ausführung der Erfindung besteht darin, dass die Windenergieanlage mit einem Sichtweitenmessgerät ausgestattet ist. Mit Hilfe dieses Messgerätes lässt sich die Sichtweite erfassen, was insbesondere bei Nebel oder anderen ungünstigen Wetterlagen (starker Regen) sinnvoll ist. Wird mittels des Sichtweitenmessgerätes das Unterschreiten einer bestimmten Sichtweite (die kritische Sichtweite kann eingestellt werden) festgestellt, wird ebenfalls die Flugbefeuerung aktiviert, so dass stets eine ausreichende Bauwerkssicherheit gegeben ist.

Werden mehrere Windenergieanlagen zusammen aufgestellt, was regelmäßig in Windparks der Fall ist, und müssen diese Windenergieanlagen aufgrund ihrer großen Höhe mit einer Gefahrenbefeuerung ausgestattet werden, ist es für den Flug- und Autoverkehr oftmals sehr störend/irritierend, wenn die Gefahrenfeuer an jeder einzelnen Windenergieanlage zu unterschiedlichen Zeiten aufblitzen (d. h. also eingeschaltet bzw. ausgeschaltet werden). Hierzu sieht die Erfindung die Ausbildung einer Synchronisationseinrichtung vor, mittels der die Blitzleuchten derart synchronisiert werden, dass sämtliche Blitzleuchten aller Windenergieanlagen eines Windparks zur gleichen Zeit aufblitzen (d. h. also an- bzw. ausgeschaltet werden). Die Synchronisation kann hierbei über Funk- und/oder Datensignale erfolgen und die Synchronisationseinrichtung kann aus einer Datenverarbeitungseinrichtung bestehen, die gekoppelt mit einem Uhrwerk die Anschalt- bzw. Ausschaltsignale der Blitzleuchten generiert, so dass der Zweck erreicht wird.

Eine Flugbefeuerungseinrichtung muss bei einer Windenergieanlage so sicher ausgelegt sein, dass sie ihre Funktionstüchtigkeit auch noch dann aufweist, wenn die gesamte Windenergieanlage vom elektrischen Netz abgenommen ist bzw. der Rotor der Windenergieanlage stillsteht. Deshalb wird eine Notstromversorgungseinrichtung für eine Windenergieanlage und deren Flugbefeuerung vorgeschlagen, so dass zumindestens für eine Nacht die Flugbefeuerung aufrechterhalten werden kann. Hierzu ist bei der Windenergieanlage ein (bevorzugt klimatisierter) Schaltschrank vorgesehen, in dem die gesamten Steuerungseinrichtungen für die Flugbefeuerung angeordnet sind und zudem auch noch Batterien bzw. Akkumulatoren, die die notwendige Energie für die Flugbefeuerung liefern. Diese Batterien bzw. Akkumulatoren sind bevorzugt absolut wartungsfrei.

Für mehrere Windenergieanlagen eines Windparks kann auch ein zentraler Schaltschrank für Notstrom und Steuerung der Flugbefeuerung vorgesehen werden.

Die Flugbefeuerungseinrichtung steuert nicht nur die jeweilige Flugbefeuerung (Hindernisbefeuerung, Gefahrenfeuer), sondern überwacht auch noch die Störung verschiedener Einrichtungen wie den Ausfall der Versorgungsspannung, den Ausfall einer Lampe, Störung des Dämmerungsschalters, Störung von Batterien bzw. des Ladegerätes zum Aufladen der Akkumulatoren, Störung der Klimatisierung des Schaltschranks, den Ausfall der Sichtweitenmessung (falls diese vorhanden ist) sowie die Störung der Synchronisierung (nur bei Gefahrenbefeuerung).

Wird eine solche Störmeldung festgestellt, wird diese automatisch über die Anbindung an die Anlagensteuerung an eine Zentrale weitergeleitet. Die Übermittlung der Störmeldung an die Zentrale kann mittels Fax, SMS oder auch e-mail erfolgen.

Die Gefahrenbefeuerung besteht aus je zwei Haupt- und zwei Reserveleuchten. Die Lichtdstärke der Blitze beträgt mehr als 1600 cd/Blitz. Die Blitze befinden sich in einem Gehäuse der Schutzart IP 67. Als Leuchtmittel ist hier ein Xenonblitzrohr mit einer Nennlebensdauer von ca. 2.000.000 Blitzen (entspricht ca. 12 Monaten).

Fällt eine Hauptblitzleuchte aus, wird automatisch auf das redundante zweite System (Reserveleuchte) umgeschaltet und eine Störmeldung an die Zentrale abgesetzt.

Die Hindernisbefeuerung besteht aus zwei Hindernisleuchten und ist bevorzugt mit Leuchtmitteln aus LEDs ausgeführt. Die Leuchtmittel befinden sich in einem Gehäuse der Schutzart IP 67. Da die Betriebsdauer er oben beschriebenen Hindernisleuchten erfasst wird, ist bei diesem Aufbau kein redundantes System notwendig. Durch den Einsatz von LED-Leuchtmitteln ist der Stromverbrauch sehr gering und die Lebensdauer mit mindestens 10 Jahren sehr hoch.

Ein weiterer Aspekt der Erfindung befasst sich damit, dass insbesondere bei Baustellen, z. B. für Windenergieanlagen, auf denen der Turm der Windenergieanlage bereits errichtet ist, das Maschinenhaus, der Rotor, der Generator und die elektrischen Installationen jedoch noch nicht vorhanden sind, eine Flugbefeuerungseinrichtung fehlt, obwohl der Turm durchaus ein Flughindernis bzw. einen Gefahrenpunkt bildet.

Zur Lösung dieses Problems wird erfindungsgemäß eine Flugbefeuerungseinrichtung vorgeschlagen, welche über eine transportable Energieversorgung verfügt. Durch eine solche autarke, von einer festen Installation unabhängige, Energieversorgung kann jedes Bauwerk bei Bedarf mit einer Flugbefeuerungseinrichtung ausgestattet werden. Dies ermöglicht die im Interesse der Flugsicherheit erforderliche Kennzeichnung dieses Bauwerkes auch dann, wenn eine Stromversorgung dieses Bauwerkes (noch) nicht hergestellt ist.

In bevorzugten Weiterbildungen dieser Erfindung kann eine erfindungsgemäße Flugbefeuerungseinrichtung über folgende Merkmale verfügen, die allein oder in Kombinationen ausgebildet sein können.

Durch Verwendung von Dämmerungsschaltern kann die mögliche Betriebszeit verlängert werden.

Als Energiespeicher kommen Akkumulatoren und/oder Kondensatoren z. B. vom Typ "Ultracap" in Betracht. Zur Ergänzung des Energievorrates können z. B. fotovoltaische Module und/oder ein transportabler Generator mit einem Rotor zur Umwandlung von Windenergie in elektrische Energie vorgesehen sein. Sowohl das Fotovoltaik-Modul wie auch der Generator liefern zwar nur eine begrenzte Energiemenge, diese kann jedoch z. B. über eine geeignete Steuerung wie einen Laderegler kontinuierlich in die Energiespeicher eingespeist und bei Bedarf entnommen werden. So ist bei geeigneter Auslegung der Energiespeicher theoretisch ein zeitlich unbegrenzter Betrieb möglich.
Um die Lebensdauer von Akkumulatoren zu erhöhen und deren Tiefst-Entladung zu vermeiden, kann bevorzugt ein sogenannter Akkuwächter vorgesehen sein, der bei Erreichen einer vorgebbaren unteren Klemmenspannung des/der Akkus die Energieentnahme unterbindet.

Neben der Überwachung der einzelnen Komponenten kann eine Einrichtung vorgesehen sein, welche im Falle einer Störung eine Störungsmeldung z. B. zu einer vorgegebenen Zentrale absetzt. Eine solche Einrichtung umfasst bevorzugt ein GSM-Modul, das z. B. über eine Funkverbindung eine Kurzmitteilung (SMS) absetzen kann, die den Empfänger auf die Störung hinweist.

Darüber hinaus kann ein Transportbehälter vorgesehen sein, in dem die einzelnen Komponenten der Flugbefeuerungseinrichtung, wie Akkumulatoren, Schalteinrichtung, GSM-Modul, Laderegler, Akkuwächter, etc. untergebracht sind. Dabei können die Leuchten bevorzugt auf dem Deckel dieser Transportvorrichtung angebracht sein, so dass die gesamte erfindungsgemäße Flugbefeuerungseinrichtung als eine Einheit handhabbar ist.

Besonders bevorzugt sind in dem Transportbehälter weiterhin Halter für die im Betrieb notwendig außerhalb des Behälters angeordneten Teile der Flugbefeuerungseinrichtung, wie z. B. das Fotovoltaik-Modul und/oder den Generator vorgesehen, so dass diese für den Transport ebenfalls in dem Transportbehälter untergebracht werden und daher nicht verloren gehen können.

Dabei können der Generator und/oder das Fotovoltaik-Modul während des Betriebes an dem Transportbehälter befestigt sein bzw. von diesem abgesetzt an günstigen Stellen an der Spitze des Turmes befestigt sein. Diese Befestigung kann wiederum über geeignete Halter (Flansche) erfolgen.

Sofern der Transportbehälter eine ausreichende Höhe aufweist, können auch die Leuchten während des Transportes in diesem Behälter gestaut werden, so dass sie einerseits nicht verloren gehen können und andererseits auch vor Beschädigungen geschützt sind. Dazu ist der Deckel des Behälters vorteilhaft derart ausgebildet, dass er sowohl mit den daran angebrachten Leuchten aufwärts weisend, wie auch mit den daran angebrachten Leuchten abwärts weisend den Behälter dicht verschliesst und so dessen Innenraum zuverlässig vor Witterungseinflüssen schützt.

Um eine einfache Handhabung zu verwirklichen, wird die elektrische Verbindung zwischen der Schalteinrichtung bzw. der Umschaltvorrichtung bevorzugt durch eine lösbare Kabelverbindung hergestellt. Dabei ist die Kabelverbindung bevorzugt an der Schalteinrichtung mit einem oder mehreren Verbindern lösbar.

Die obere Abdeckung des Transportbehälters, an welcher die Leuchten vorgesehen sind, weist ein Fach auf, welches das Verbindungskabel zwischen den Leuchten und der Schalteinrichtung aufnimmt. Dieses Fach kann eine Abdeckung aufweisen, welche das Fach in der Transportposition des Behälterdeckels mit in den Behälter hinein ragenden Leuchten verschließt.

Zur Synchronisierung mehrerer Flugbefeuerungseinrichtungen können diese über einen Funkempfänger verfügen, der Signale eines zentralen Senders wie des DCF-Senders der Physikalisch-Technischen Bundesanstalt empfängt und zu vorgegebenen Zeitpunkten, die sich aus dem Funksignal ableiten lassen, bestimmte Schaltvorgänge wie Blinkimpulse für die Leuchten, auslöst. Alternativ zu einem DCF- Empfänger können natürlich auch mehrere räumlich benachbarte Flugbefeuerungseinrichtungen über Funksignale einer vorgebbaren Sendestation wie z. B. einer Master-Anlage gesteuert werden.

In den Figuren sind Ausführungsbeispiele der Erfindung dargestellt. Dabei zeigen
- Fig. 1: die Frontal- bzw. Seitenansicht einer Windenergieanlage mit einem erfindungsgemäßen Hindernis- oder Gefahrenfeuer;
- Fig. 2: eine erste Ausführungsform einer erfindungsgemäßen transportablen Energiequelle zur Energieversorgung einer Flugbefeuerungseinrichtung;
- Fig. 3: eine alternative Ausführungsform einer erfindungsgemäßen transportablen Energiequelle; und
- Fig. 4: eine Detailansicht einer Abdeckung eines Transportbehälters.

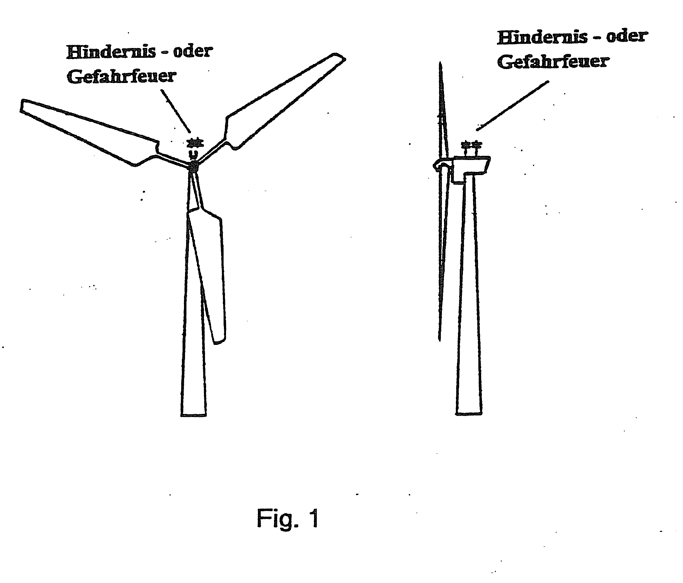

Fig. 1 zeigt in einer Skizze die Frontal- bzw. Seitenansicht einer Windenergieanlage mit einem erfindungsgemäßen Hindernis- oder Gefahrenfeuer. Dieses Hindernis-und/oder Gefahrenfeuer ist auf der Gondel angeordnet.

Bei der Ausbildung als Gefahrenfeuer blinken diese 20 bis 60 mal pro Minute. Ihre Einschaltzeit während der Blinkphase ist länger als die Dunkelphase. Es können auch rote Blitzfeuer eingesetzt werden. Die Blinkfrequenz soll zwischen 20 und 60 mal pro Minute liegen. Im Übrigen hat ein Hindernis- oder Gefahrenfeuer den Richtlinien für die Kennzeichnung von Luftfahrthindernissen des Bundesministeriums für Verkehr, Bau- und Wohnungswesen vom 22. Dezember 1999 (Gefahrfeuerverordnung) zu genügen.

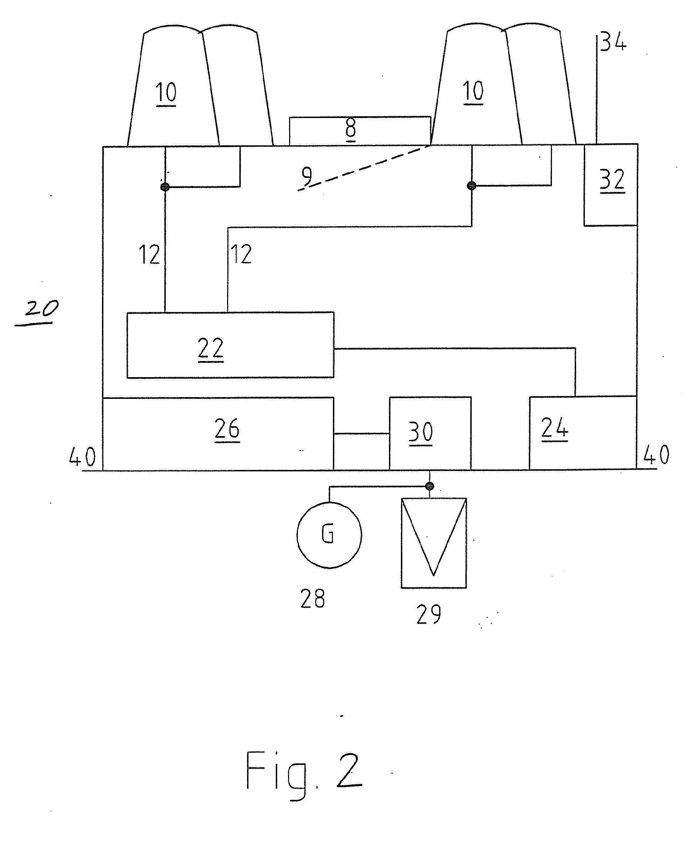

Figur 2 zeigt einen Transportbehälter 20 mit einer Schalteinrichtung 22, in welche eine Leuchtenüberwachung integriert sein kann. Diese Schalteinrichtung 22 steuert Leuchten 10 in einer vorgebbaren Weise an, die z. B. durch eine feste Verdrahtung oder durch eine Mikroprozessorsteuerung vorgegeben sein kann. Weiterhin kann die Schalteinrichtung durch externe Signale beeinflusst werden. Diese können von einem Dämmerungsschalter 24 stammen.

Ein solcher Dämmerungsschalter 24 ist vorgesehen, um abhängig von der Umgebungshelligkeit die erfindungsgemäße Flugbefeuerungseinrichtung zu beeinflussen. Diese Beeinflussung kann das Ein- bzw. Ausschalten der Flugbefeuerungseinrichtung bei einer bestimmten Umgebungshelligkeit sein.

Zur Stromversorgung der gesamten Flugbefeuerungseinrichtung ist ein Energiespeicher 26 vorgesehen, der aus Akkumulatoren und/oder Kondensatoren oder ähnlichem gebildet sein kann. Dieser Energiespeicher 26 kann durch einen Generator zum Umwandeln von Windenergie in elektrische Energie 28 und/oder ein Fotovoltaik-Modul 29 gespeist werden, die über einen Laderegler 30 mit dem Energiespeicher 26 verbunden sind. Dieser Laderegler 30 bewirkt eine Ladung der Akkumulatoren bzw. Kondensatoren mit geeigneten Spannungen und Strömen.

Der Generator 28 und das Fotovoltaik-Modul 29 weisen derartige Abmessungen auf, dass sie für den Transport der Flugbefeuerungseinrichtung in dem Transportbehälter 20 untergebracht werden können. Dadurch sind sie während des Transportes vor Schäden geschützt und können nicht verloren gehen, so dass stets alle Komponenten der Flugbefeuerungseinrichtung vorhanden sind.

In dieser Figur 2 sind auf dem Transportbehälter 20 je zwei Leuchtenpaare 10 angebracht, von denen eines das Haupt-Leuchtenpaar und das andere das Reserve-Leuchtenpaar ist. Weiterhin befindet sich auf dem Transportbehälter 20 eine Antenne 34, die mit einem in dem Behälter angeordneten GSM-Modul 32 verbunden ist. Über dieses GSM-Modul 32 können z. B. im Falle von Störungen entsprechende Störungsmeldungen zu vorgegebenen Empfängern abgesetzt werden.

Um eine Befestigung der erfindungsgemäßen Flugbefeuerungseinrichtung an dem Turm zu ermöglichen, sind Befestigungsflansche 40 an dem Transportbehälter 20 vorgesehen, durch die er mit Schrauben am Turm befestigt werden kann.

Die elektrische Verbindung zwischen der Schalteinrichtung 22 und den Leuchten 10 wird durch Kabel 12 hergestellt. Diese Kabel 12 sind bevorzugt an der Schalteinrichtung 22 lösbar, so dass die Abdeckung des Transportbehälters 20 mit den daran angebrachten Leuchten 10 einschließlich der elektrischen Verbindungen vollständig von dem Transportbehälter 20 gelöst werden kann.

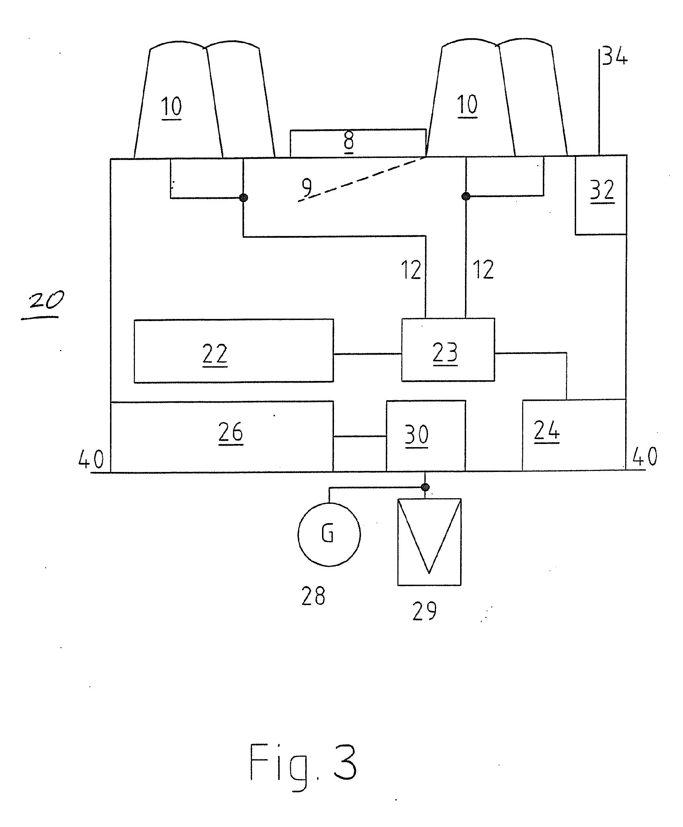

Zum Transport der Flugbefeuerungseinrichtung kann der Deckel mit den daran angebrachten Leuchten 10 dann so auf den Transportbehälter 20 aufgesetzt werden, dass die Leuchten 10 sich im Inneren des Transportbehälters 20 befinden. In dieser Einbausituation des Deckels befinden sich nunmehr die Kabel 12 an der Außenseite des Transportbehälters 20. Um die Kabel 12 zu schützen, können diese in einem Fach 8 verstaut werden, das mit einem Deckel 9 verschließbar ist. Figur 3 entspricht im Wesentlichen Figur 2. Der Unterschied besteht darin, dass hier eine Umschaltvorrichtung 23 vorgesehen ist. Diese Umschaltvorrichtung 23 empfängt die Signale zur Ansteuerung der Leuchten 10 von der Schalteinrichtung 22 und leitet sie weiter zu den Leuchten 10. Weiterhin wird die Umschalteinrichtung 23 von dem Dämmerungsschalter 24 beeinflusst. Dabei wird die Umschalteinrichtung so gesteuert, dass abhängig von der Umgebungshelligkeit jeweils eines der beiden Leuchtenpaare 10 mit den Signalen der Schalteinrichtung 22 beaufschlagt wird.

Wenn verschiedenfarbige Leuchten 10 vorgesehen sind, z. B. rote Leuchten für die Nacht-Befeuerung und weiße Leuchten für die Tag-Befeuerung, kann der Dämmerungsschalter 24 alternativ dazu verwendet werden, die Umschaltung zwischen Tag- und Nacht-Befeuerung abhängig von der Umgebungshelligkeit vorzunehmen. Natürlich kann die für die Umschaltung zwischen Tag-Befeuerung und Nacht-Befeuerung erforderliche Umschaltvorrichtung in die Schalteinrichtung 22 integriert sein.

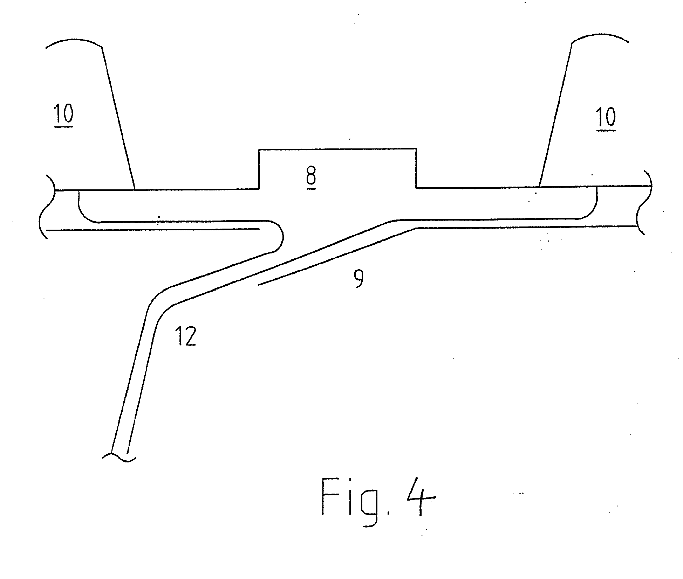

Figur 4 zeigt eine Detaildarstellung einer möglichen Kabelführung. Die Kabel 12 sind an den Leuchten 10 angebracht. Im Betrieb ist die in den Transportbehälter hinwein weisende Klappe 9 offen und die Kabel 12 können mit der Schalteinrichtung 22 oder der Umschaltvorrichtung 23 verbunden werden.

Für den Transport der Flugbefeuerung wird die Abdeckung so gedreht, dass die Leuchten 10 abwärts (in den Transportbehälter hinein) weisen. Die jetzt an der Oberseite befindlichen Kabel 12 sind dann ungeschützt, soweit sie nicht in dem Fach 8 aufgenommen sind. Um eine Beschädigung der Kabel 12 zu verhindern, können sie innerhalb eines zweischaligen Deckels verlegt sein, und im Bereich der Abdeckung für das Fach 9 aus dem Deckel heraustreten und zu der Schalteinrichtung 22 bzw. der Umschaltvorrichtung 23 geführt werden.

Für den Transport können die Kabel 12 in dem Fach 8 verstaut werden. Dabei kann die Abdeckung 9, die sich während des Transportes an der Aussenseite des Transportbehälters befindet, das Fach 8 sowie den Innenraum des zweischaligen Deckels vor Verunreinigungen und Beschädigungen schützen.

Bevorzugte Ausführungsformen der Erfindung:
Ausführungsform 1: Flugbefeuerungseinrichtung eines Bauwerks großer Höhe, vorzugsweise einer Windenergieanlage mit wenigstens einem Leuchtmittel, welches auf dem Bauwerk angebracht ist, wobei eine Einrichtung zur Erfassung des Helligkeitswertes, z. B. ein Dämmerungsschalter, vorgesehen ist, welcher die Tageshelligkeit in der Gebäudeumgebung erfasst, dass die Einrichtung zum Erfassen des Helligkeitswertes mit einer Schalteinrichtung verbunden ist, die die gemessenen Daten auswertet und die Flugbefeuerung einschaltet, wenn ein bestimmter Helligkeitswert unterschritten wird.
Ausführungsform 2: Flugbefeuerungseinrichtung einer Windenergieanlage, insbesondere nach Ausführungsform 1,
   dadurch gekennzeichnet, dass eine Sichtweitenmesseinrichtung vorgesehen ist, mittels welcher die Flugbefeuerung aktiviert wird, wenn eine bestimmte Sichtweite unterschritten wird.
Ausführungsform 3: Flugbefeuerungseinrichtung einer Windenergieanlage, insbesondere nach einer der vorhergehenden Ausführungsformen,
   dadurch gekennzeichnet, dass als Leuchtmittel Blitzleuchten ausgebildet sind und dass eine Synchronisationseinrichtung vorgesehen ist, die die Leuchtmittel in der Weise studiert, dass die Leuchtmittel der Windenergieanlage wie auch die Leuchtmittel anderer in der Nähe befindlicher Blitzleuchten zur gleichen Zeit an bzw. ausgeschaltet sind.
Ausführungsform 4: Flugbefeuerungseinrichtung nach Ausführungsform 3,
   dadurch gekennzeichnet, dass die Synchronisationseinrichtung durch eine Funksignal-und/oder Datensignalsteuerung andere Flugbefeuerungseinrichtungen in der Umgebung der ersten Flugbefeuerungseinrichtung steuert.
Ausführungsform 5: Flugbefeuerungseinrichtung, insbesondere nach einer der vorhergehenden Ausführungsformen,
   dadurch gekennzeichnet, dass die Flugbefeuerungseinrichtung Leuchtmittel aufweist, die aus einer Vielzahl von LED (Lichtemitierende Dioden) besteht.
Ausführungsform 6: Flugbefeuerungseinrichtung einer Windenergieanlage, insbesondere nach einer der vorhergehenden Ausführungsformen,
   gekennzeichnet durch eine transportable Energiequelle zur Energieversorgung des Leuchtmittels und der Schalteinrichtung.
Ausführungsform 7: Flugbefeuerungseinrichtung nach Ausführungsform 6,
   gekennzeichnet durch einen Energie-Zwischenspeicher (26), der mit einer Energieerzeugungseinrichtung (28, 29), koppelbar ist.
Ausführungsform 8: Flugbefeuerungseinrichtung nach Ausführungsform 6,
   gekennzeichnet durch ein GSM-Modul (32) zum Übermitteln von Störungsmeldungen.
Ausführungsform 9: Flugbefeuerungseinrichtung nach Ausführungsform 6,
   dadurch gekennzeichnet, dass das Leuchtmittel (10) an einem Transportbehälter (20) befestigbar ist.
Ausführungsform 10: Flugbefeuerungseinrichtung nach Ausführungsform 9,
   dadurch gekennzeichnet, dass die Höhe des Transportbehälters (20) so bemessen ist, dass zwischen den Einbauten in dem Transportbehälter (20) und dem Rand des Transportbehälters (20) wenigstens die Höhe des Leuchtmittels (10) frei bleibt.
Ausführungsform 11: Flugbefeuerungseinrichtung nach Ausführungsform 6,
   dadurch gekennzeichnet, dass das Leuchtmittel (10) wenigstens während des Betriebes der Flugbefeuerungseinrichtung getrennt von dem Transportbehälter (20) anordbar ist.
Ausführungsform 12: Flugbefeuerungseinrichtung nach Ausführungsform 6,
   gekennzeichnet durch wenigstens eine wenigstens einseitig lösbare elektrische Verbindung zwischen dem Leuchtmittel (10) und der Schalteinrichtung (22) bzw. der Umschaltvorrichtung.
Ausführungsform 13: Flugbefeuerungseinrichtung nach Ausführungsform 6, gekennzeichnet durch ein Aufnahmefach (8) für Kabel.
Ausführungsform 14: Flugbefeuerungseinrichtung nach einer der vorstehenden Ausführungsformen,
   dadurch gekennzeichnet, dass die Schalteinrichtung (22) und/oder der Dämmerungsschalter (24) mit dem Leuchtmittel (10) zusammengefasst sind.
Ausführungsform 15: Flugbefeuerungseinrichtung nach einer der vorstehenden Ausführungsformen,
   dadurch gekennzeichnet, dass mindestens zwei verschiedenfarbige Leuchtmittel (10) vorgesehen sind.
Ausführungsform 16: Flugbefeuerungseinrichtung nach Ausführungsform 15,
   gekennzeichnet durch eine Umschalteinrichtung, welche jeweils die Leuchtmittel (10) gleicher Farbe an die Schalteinrichtung (22) anschließt.
Ausführungsform 17: Flugbefeuerungseinrichtung nach Ausführungsform 16,
   dadurch gekennzeichnet, dass der Dämmerungsschalter (24) mit der Umschaltvorrichtung zusammenwirkt.
Ausführungsform 18: Flugbefeuerungseinrichtung nach einer der vorstehenden Ausführungsformen,
   gekennzeichnet durch eine Empfangsvorrichtung für Funksignale, welche mit dem Dämmerungsschalter (24) und/oder der Schalteinrichtung (22) zusammenwirkt.
Ausführungsform 19: Transportable Energiequelle für eine Flugbefeuerungseinrichtung,
   dadurch gekennzeichnet, dass ein Transportbehälter zum Transport der Energiequelle vorgesehen ist, dass an dem Transportbehälter wenigstens ein Leuchtmittel für eine Flugbefeuerungseinrichtung befestigbar ist und/oder dass in dem Transportbehälter ein Energie-Zwischenspeicher vorgesehen ist, der mit einer Energieerzeugungseinrichtung koppelbar ist.

## Patentansprüche

1. Windpark bestehend aus mehreren Windenergieanlagen, wobei mindestens zwei der Windenergieanlagen eine Flugbefeuerungseinrichtung aufweisen, wobei jede Flugbefeuerungseinrichtung aufweist:
wenigstens ein Leuchtmittel, welches auf der Windenergieanlage angebracht ist,
wobei die Leuchtmittel als Blitzleuchten ausgebildet sind, eine Einrichtung zur Erfassung des Helligkeitswertes, z. B. ein Dämmerungsschalter, welcher die Tageshelligkeit in der Umgebung der Windenergieanlage erfasst,
eine mit der Einrichtung zum Erfassen des Helligkeitswertes verbundenen Schalteinrichtung, die die gemessenen Daten der Einrichtung zum Erfassen des Helligkeitswertes auswertet und die Flugbefeuerung einschaltet, wenn ein bestimmter Helligkeitswert unterschritten wird, und
eine Synchronisationseinrichtung, die die Leuchtmittel in der Weise steuert, dass die Leuchtmittel der Flugbefeuerung der Windenergieanlage wie auch die Leuchtmittel anderer Windenergieanlagen des Windparks zur gleichen Zeit an- bzw. ausgeschaltet sind,
wobei die Synchronisationseinrichtung durch eine Funksignalsteuerung andere Flugbefeuerungseinrichtungen in der Umgebung der ersten Flugbefeuerungseinrichtung steuert.

2. Windpark nach Anspruch 1,
**dadurch gekennzeichnet, dass** eine Sichtweitenmesseinrichtung vorgesehen ist, mittels welcher die Flugbefeuerung aktiviert wird, wenn eine bestimmte Sichtweite unterschritten wird.

3. Windpark nach einem der Ansprüche 1 oder 2,
wobei mindestens eine der Windenergieanlagen eine Notstromversorgungseinrichtung für die Flugbefeuerungseinrichtung aufweist, so dass die Flugbefeuerung zumindest für eine Nacht aufrechterhalten werden kann.

4. Windpark nach einem der Ansprüche 1 bis 3, ferner mit
einem zentralen Schaltschrank für Notstrom und für die Steuerung der Flugbefeuerung.

5. Windpark nach einem der vorhergehenden Ansprüche,
**dadurch gekennzeichnet, dass** die Flugbefeuerungseinrichtung Leuchtmittel aufweist, die aus einer Vielzahl von LED (Lichtemitierende Dioden) besteht.

6. Windpark nach einem der vorhergehenden Ansprüche, mit
einer transportablen Energiequelle zur Energieversorgung des Leuchtmittels und der Schalteinrichtung.

7. Windpark nach Anspruch 6, mit
einer Energie-Zwischenspeicher (26), der mit einer Energieerzeugungseinrichtung (28, 29) koppelbar ist.

8. Windpark nach Anspruch 6, mit
einem GSM-Modul (32) zum Übermitteln von Störungsmeldungen.

9. Windpark nach Anspruch 6,
**gekennzeichnet durch** wenigstens eine wenigstens einseitig lösbare elektrische Verbindung zwischen dem Leuchtmittel (10) und der Schalteinrichtung (22) bzw. der Umschaltvorrichtung.

10. Windpark nach einem der vorstehenden Ansprüche,
**dadurch gekennzeichnet, dass** die Schalteinrichtung (22) und/oder der Dämmerungsschalter (24) mit dem Leuchtmittel (10) zusammengefasst sind.

11. Windpark nach einem der vorstehenden Ansprüche,
**dadurch gekennzeichnet, dass** mindestens zwei verschiedenfarbige Leuchtmittel (10) vorgesehen sind.

12. Windpark nach Anspruch 11,
**gekennzeichnet durch** eine Umschalteinrichtung, welche jeweils die Leuchtmittel (10) gleicher Farbe an die Schalteinrichtung (22) anschließt.

13. Windpark nach Anspruch 12,
**dadurch gekennzeichnet, dass** der Dämmerungsschalter (24) mit der Umschaltvorrichtung zusammenwirkt.

14. Windpark nach einem der vorstehenden Ansprüche,
**gekennzeichnet durch** eine Empfangsvorrichtung für Funksignale, welche mit dem Dämmerungsschalter (24) und/oder der Schalteinrichtung (22) zusammenwirkt.

15. Windpark nach einem der vorherigen Ansprüche,
wobei die Schalteinrichtung mit einer Umschaltvorrichtung zum Umschalten von einem Leuchtmittel einer Farbe auf ein andersfarbiges Leuchtmittel zusammenwirkt, wenn ein bestimmter Helligkeitswert erreicht wird.
